# EUROPEAN PATENT APPLICATION

(11) **EP 4 446 153 A1**
(43) Date of publication of application: **16.10.2024**
(21) Application number: 22904100.9
(22) Date of filing: 29.11.2022
(51) Int. Cl.: B60K 15/04, F16J 15/10

(54) **INLET BOX**

(30) Priority: 08.12.2021 JP 2021199663
(71) Applicant: Alpha Corporation, Yokohama-shi, Kanagawa 236-0004 (JP)
(72) Inventor: NISHIZUKA, Mitsuo, Yokohama-shi, Kanagawa 236-0004 (JP)
(74) Representative: Daub, Thomas
(86) International application number: PCT/JP2022/044067
(87) International publication number: WO 2023/106169

(57) **Abstract**

An inlet box fitted and mounted in an opening formed in a vehicle body panel includes a seal portion that is provided at a position facing a seal surface of the opening on an inner peripheral edge and that seals with the seal surface over the whole periphery. The seal portion includes a first lip portion that is provided to protrude toward the seal surface over a peripheral direction and is in close contact with the seal surface and a second lip portion that is provided to protrude toward the seal surface over the peripheral direction and is in close contact with the seal surface on an inner peripheral side relative to the first lip portion. A drain hole is formed between the first lip portion and the second lip portion. The drain hole communicates an inside space portion formed by the seal surface, the first lip portion, and the second lip portion, and an outside space portion with a lid arranged with a gap on an opposite side from the seal surface.

## Description

### TECHNICAL FIELD

The present disclosure relates to an inlet box.

### BACKGROUND ART

A lid device for opening and closing a fuel supply port of a vehicle such as an automobile is attached to the fuel supply port. The lid device has a fuel inlet box attached to an attachment hole formed in a vehicle body side panel.

PTL 1 discloses that a ring-shaped seal member that seals an attachment surface of a peripheral edge portion of an attachment hole is provided in a fuel inlet box and the seal member includes two lip portions.

When the seal member including the two lip portions is provided as the fuel inlet box disclosed in PTL 1, the sealing performance with a vehicle body side panel can be improved, and for example, even when washing the vehicle, water can be prevented from entering beyond an area sealed by the seal member.

However, when there are two lip portions, it is difficult to uniformly press the lip portions against the attachment surface. For example, when a pressing force by the lip portion on an outer peripheral side increases, a pressing force by the lip portion on an inner peripheral side may be reduced. In this case, when the amount of water exceeding the lip portion on the outer peripheral side and entering between the lip portions increases and the water pressure increases, the water may exceed the lip portion on the inner peripheral side and enter an inner side.

### CITATION LIST

### PATENT LITERATURE

Patent Literature 1: JP2014-69595A

### SUMMARY OF INVENTION

### TECHNICAL PROBLEM

The present disclosure provides an inlet box including a seal portion excellent in sealing performance.

### SOLUTION TO PROBLEM

According to an embodiment of the present disclosure, an inlet box fitted and mounted in an opening formed in a vehicle body panel includes a seal portion that is provided at a position facing a seal surface of the opening on an inner peripheral edge and that seals with the seal surface over the whole periphery.

The seal portion includes a first lip portion that is provided to protrude toward the seal surface over a peripheral direction and is in close contact with the seal surface and a second lip portion that is provided to protrude toward the seal surface over the peripheral direction and is in close contact with the seal surface on an inner peripheral side relative to the first lip portion. A drain hole is formed between the first lip portion and the second lip portion. The drain hole communicates an inside space portion formed by the seal surface, the first lip portion, and the second lip portion, and an outside space portion with a lid arranged with a gap on an opposite side from the seal surface.

The present invention has been briefly described above. Further, the details of the present invention will be further clarified by reading an embodiment to be described later with reference to the accompanying drawings.

### BRIEF DESCRIPTION OF DRAWINGS

FIG. 1 is a perspective view of an inlet box according to an embodiment mounted in an opening of a vehicle body panel.
FIG. 2 is a perspective view of a lid device mounted in the opening of the vehicle body panel.
FIG. 3 is a cross-sectional view taken along A-A in FIG. 2.
FIG. 4 is a cross-sectional view taken along B-B in FIG. 2.
FIG. 5 is a perspective view of the lid device mounted in the opening of the vehicle body panel, as viewed in a cross-section along a vertical direction.
FIG. 6 is an enlarged view of a part C in FIG. 5.
FIG. 7 is an enlarged view of a part D in FIG. 3.
FIG. 8 is an enlarged view of a part E in FIG. 1.
FIG. 9 is a view showing a seal portion according to a reference example and is a cross-sectional view of a part of the seal portion along the vertical direction.

### DESCRIPTION OF EMBODIMENTS

A specific embodiment will be described below with reference to the drawings.

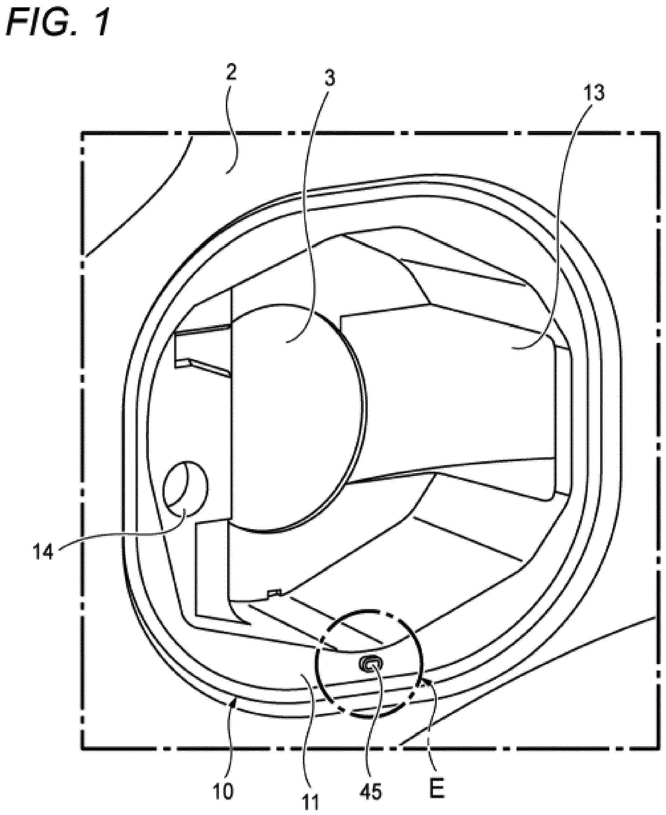

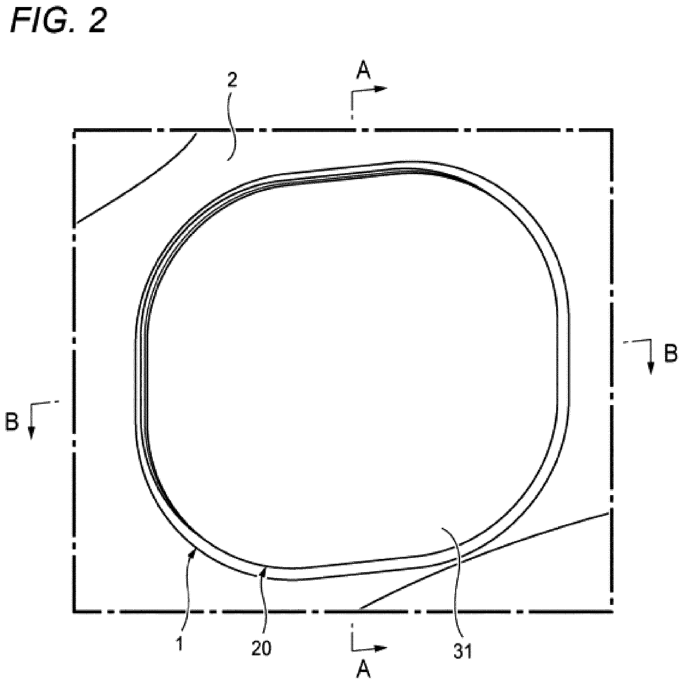

FIG. 1 is a perspective view of an inlet box according to the present embodiment mounted in an opening of a vehicle body panel. FIG. 2 is a perspective view of a lid device mounted in the opening of the vehicle body panel.

As shown in FIG. 1, an inlet box 10 according to the present embodiment is mounted in an opening 3 provided in a vehicle body panel 2 such as a rear fender in a vehicle such as an automobile. The opening 3 is provided in the vehicle, for example, as a fuel supply port or a power supply port.

As shown in FIG. 2, a lid 20 is assembled to the inlet box 10, and a lid device 1 is formed together with the lid 20. The lid device 1 opens and closes the opening 3 by the lid 20, and a user performs a fuel supply operation or a power supply operation to the vehicle in a state in which the opening 3 is opened, and closes the opening 3 by the lid 20 of the lid device 1 after the fuel supply operation or the power supply operation is completed.

The lid device 1 has a lock mechanism (not shown) that locks the lid 20 in a state in which the opening 3 is closed, and can be, for example, opened and closed by releasing the lock of the lid 20 in conjunction with an operation of an opener in a vehicle interior or an operation of unlocking a door lock of the vehicle. In the lid device 1, by pushing a surface of the lid 20 in an unlocked state, the lid 20 is pushed up by a certain amount by a push lifter (not shown).

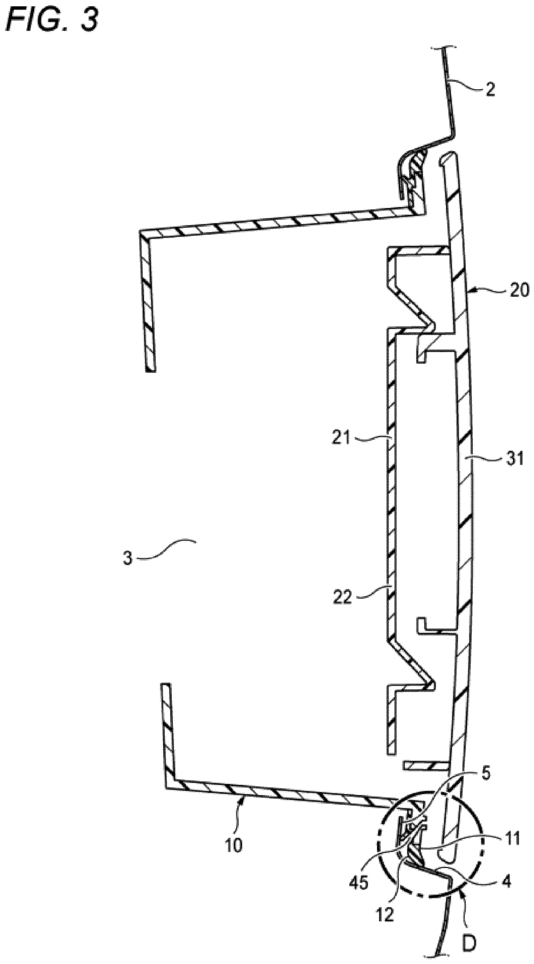

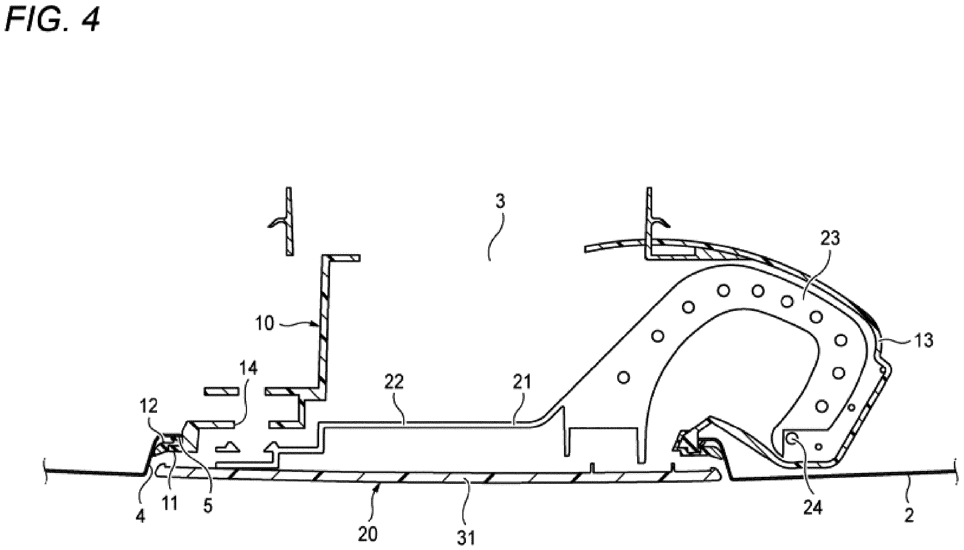

FIG. 3 is a cross-sectional view taken along a line A-A in FIG. 2. FIG. 4 is a cross-sectional view taken along a line B-B in FIG. 2.

As shown in FIGS. 3 and 4, the opening 3 formed in the vehicle body panel 2 has a step 4 such that an inner peripheral edge thereof is recessed inward. A portion having the step 4 is formed as a seal surface 5 over the whole periphery.

The inlet box 10 is formed of, for example, a synthetic resin, is formed in a tubular shape, and is fitted and mounted on the vehicle body panel 2 from an outside of the opening 3. The inlet box 10 includes a flange portion 11 on an opposite side from a mounting side of the inlet box 10 to the opening 3. The flange portion 11 is provided with a seal portion 12 that seals between the flange portion 11 and the seal surface 5.

The inlet box 10 includes an arm accommodating chamber 13 that protrudes outward at one side portion. The inlet box 10 further includes a push lifter mounting portion 14 on which a push lifter is mounted on the other portion side.

The lid 20 includes a support body 21 and a lid body 31. The support body 21 includes a body portion 22 and an arm portion 23. The body portion 22 is formed in a substantially plate shape, and the lid body 31 is attached to a front surface side on an opposite side of the body portion 22 from an assembly side of the body portion 22 to the inlet box 10. The arm portion 23 is integrally connected to one side portion of the body portion 22. The arm portion 23 extends obliquely rearward from the body portion 22, and a front portion thereof is curved forward.

The support body 21 is assembled to the inlet box 10 such that the arm portion 23 is inserted into the inlet box 10 from a front side of the inlet box 10 and is accommodated in the arm accommodating chamber 13. In the support body 21, the front portion of the arm portion 23 accommodated in the arm accommodating chamber 13 is rotatably supported by a rotating shaft 24. Accordingly, the lid 20 is openable and closable with respect to an opening side on which the flange portion 11 of the inlet box 10 is provided.

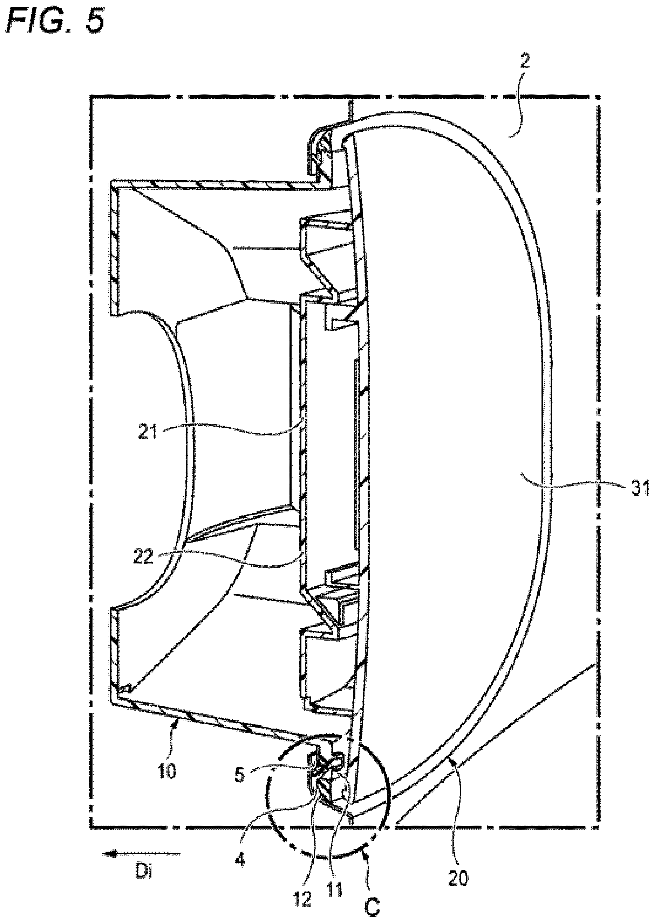

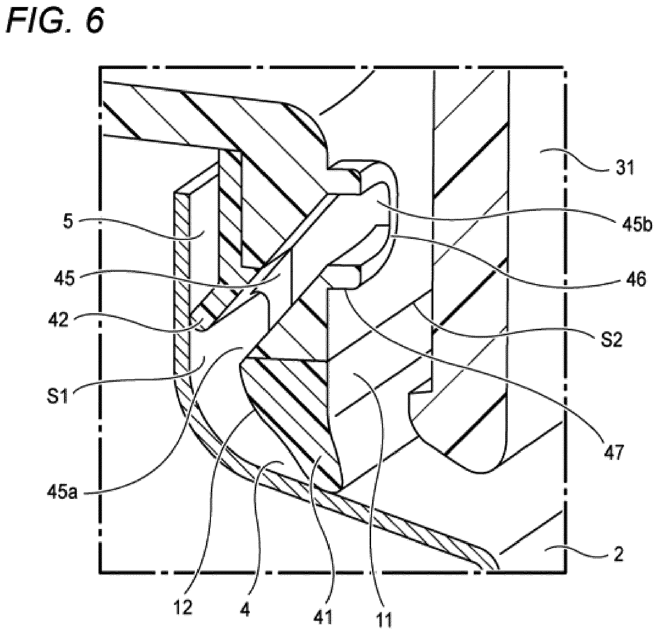

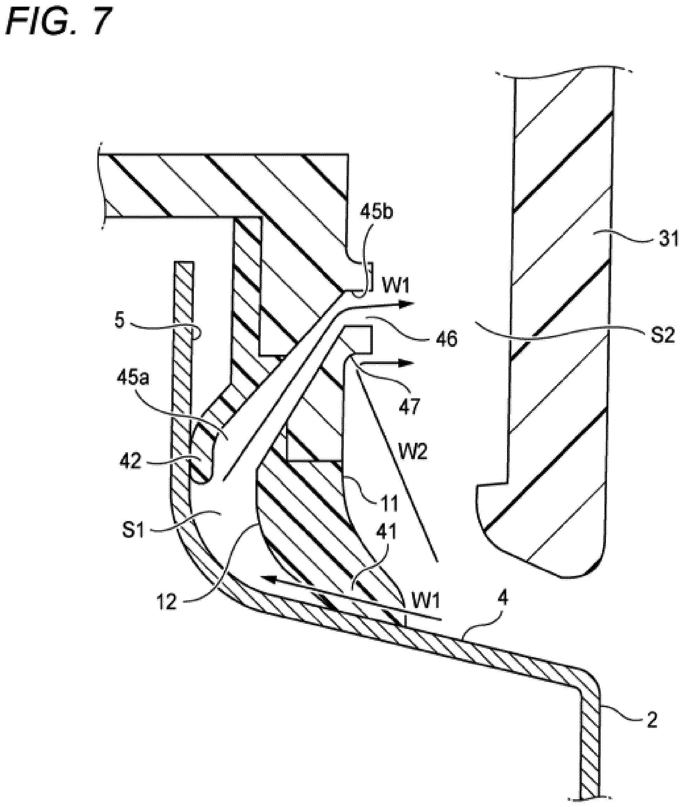

FIG. 5 is a perspective view of the lid device mounted in the opening of the vehicle body panel, as viewed in a cross-section along a vertical direction. FIG. 6 is an enlarged view of a part C in FIG. 5. FIG. 7 is an enlarged view of a part D in FIG. 3.

As shown in FIGS. 5 to 7, the seal portion 12 provided at the flange portion 11 of the inlet box 10 is arranged to face the seal surface 5 in a state in which the inlet box 10 is fitted and mounted in the opening 3 of the vehicle body panel 2. For example, when the inlet box 10 is formed, the seal portion 12 is molded by two-color molding and is formed of a resin material having elasticity. The seal portion 12 includes an outer peripheral lip portion (first lip portion) 41 and an inner peripheral lip portion (second lip portion) 42. The outer peripheral lip portion 41 and the inner peripheral lip portion 42 are formed in the flange portion 11 of the inlet box 10 in a peripheral direction. The seal portion 12 is not limited to the two-color molding and may be separately molded and attached to the inlet box 10.

In a cross-sectional view, the outer peripheral lip portion 41 extends outward in a radial direction, and the inner peripheral lip portion 42 extends in a direction inclined outward in the radial direction toward a mounting direction (direction of an arrow Di in FIG. 5) of the inlet box 10 to the vehicle body panel 2. In a state in which the inlet box 10 is mounted on the vehicle body panel 2, front portions of the outer peripheral lip portion 41 and the inner peripheral lip portion 42 are pressed against the seal surface 5. Accordingly, the outer peripheral lip portion 41 and the inner peripheral lip portion 42 are elastically deformed and are in close contact with the seal surface 5.

The outer peripheral lip portion 41 and the inner peripheral lip portion 42 are formed at positions separated from each other. Therefore, in the state in which the inlet box 10 is mounted on the vehicle body panel 2, an inside space portion S1 defined by the seal surface 5, the outer peripheral lip portion 41, and the inner peripheral lip portion 42 is formed in the peripheral direction between the seal surface 5 and the seal portion 12.

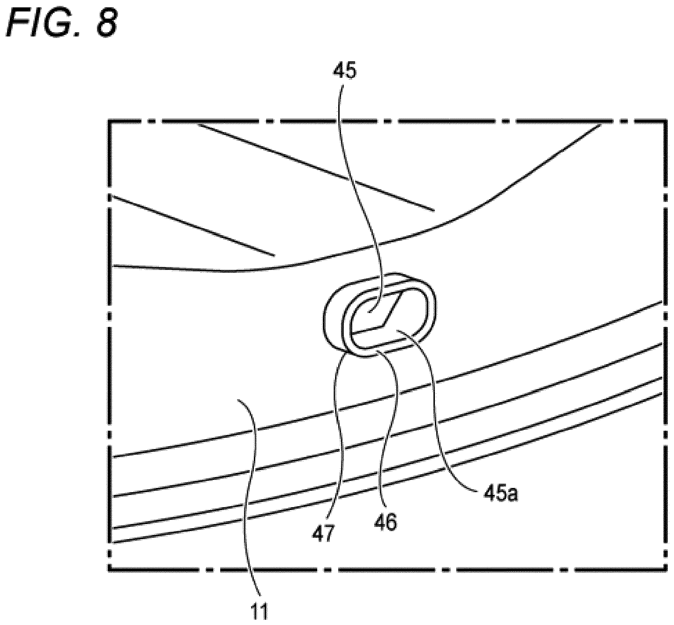

FIG. 8 is an enlarged view of a part E in FIG. 1.

As shown in FIG. 8, the inlet box 10 has a drain hole 45. The drain hole 45 is formed at a lower position of the inlet box 10 in the state in which the inlet box 10 is mounted on the vehicle body panel 2. The drain hole 45 is formed in an elliptical shape in a front view.

As shown in FIGS. 6 and 7, the drain hole 45 is formed along an extending direction of the inner peripheral lip portion 42 inclined outward in the radial direction toward the mounting direction in a cross-sectional view. An opening end 45a of the drain hole 45 on one end side is opened in the inside space portion S1 defined by the seal surface 5, the outer peripheral lip portion 41, and the inner peripheral lip portion 42. An opening end 45b of the drain hole 45 on the other end side serves as a water discharge port 46. The water discharge port 46 is opened inward relative to the inner peripheral lip portion 42 formed in a peripheral shape. The water discharge port 46 is arranged at a position facing the lid body 31 of the lid 20 inside the lid body 31 of the lid 20. Accordingly, the water discharge port 46 is arranged above a lower edge of the lid body 31 of the lid 20. The water discharge port 46 is opened in an outside space portion S2 formed between the flange portion 11 of the inlet box 10 and the lid body 31 of the lid 20. A peripheral edge of the water discharge port 46 of the drain hole 45 protrudes. Accordingly, a step portion 47 is formed around the water discharge port 46.

The inside space portion S1 defined by the seal surface 5, the outer peripheral lip portion 41, and the inner peripheral lip portion 42, and the outside space portion S2 formed between the flange portion 11 of the inlet box 10 and the lid body 31 of the lid 20 communicate with each other by the drain hole 45.

The inlet box 10 is fitted and mounted in the opening 3 of the vehicle body panel 2, whereby the outer peripheral lip portion 41 and the inner peripheral lip portion 42 are in close contact with the seal surface 5 while being elastically deformed. Accordingly, the vehicle body panel 2 and the inlet box 10 are doubly sealed to obtain an excellent seal state.

Here, a seal portion according to a reference example will be described. The same components as those of the above-described embodiment are denoted by the same reference numerals, and description thereof is omitted.

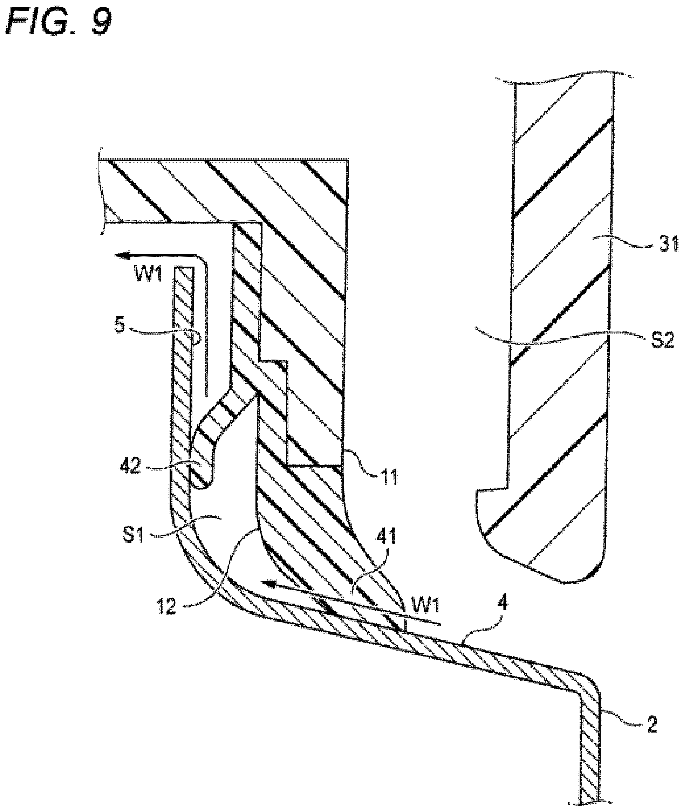

FIG. 9 is a view showing the seal portion according to the reference example and is a cross-sectional view of a part of the seal portion along the vertical direction.

As shown in FIG. 9, also in the reference example, the outer peripheral lip portion 41 and the inner peripheral lip portion 42 are included. Therefore, even in this reference example, the vehicle body panel 2 and the inlet box 10 are doubly sealed to obtain an excellent seal state.

However, when the vehicle is washed by a high-pressure washer or the like, water W1 sprayed at high pressure may exceed the outer peripheral lip portion 41. The water W1 exceeding the outer peripheral lip portion 41 accumulates in the inside space portion S1 between the outer peripheral lip portion 41 and the inner peripheral lip portion 42, and when water pressure in the inside space portion S1 increases, the water W1 may exceed the inner peripheral lip portion 42 and penetrate the opening 3 of the vehicle body panel 2.

In contrast, in the inlet box 10 according to the present embodiment, as shown in FIG. 7, when the water pressure of the water W1 accumulated in the inside space portion S1 increases, the water W1 smoothly passes through the drain hole 45 formed along the extending direction of the inner peripheral lip portion 42 and is discharged from the water discharge port 46 of the drain hole 45 to the outside space portion S2. Therefore, the water W1 is prevented from exceeding the inner peripheral lip portion 42 and from penetrating the opening 3 of the vehicle body panel 2. Further, in the inlet box 10 according to the present embodiment, since the water discharge port 46 is opened inward relative to the inner peripheral lip portion 42 formed in a peripheral shape, the drain hole 45 is formed along the extending direction of the inner peripheral lip portion 42, and the opening end 45a is opened between the outer peripheral lip portion 41 and the inner peripheral lip portion 42, water can be prevented from penetrating from the drain hole 45.

As described above, according to the inlet box 10 of the present embodiment, the vehicle body panel 2 can be doubly sealed by the outer peripheral lip portion 41 and the inner peripheral lip portion 42 to obtain an excellent seal state.

When the vehicle is washed by a high-pressure washer or the like, the water W1 that exceeds the outer peripheral lip portion 41 and enters the inside space portion S1 is discharged to the outside space portion S2 through the drain hole 45, and the water W1 can be prevented from exceeding the inner peripheral lip portion 42 and from penetrating the opening 3 of the vehicle body panel 2.

Since the drain hole 45 is formed along the extending direction of the inner peripheral lip portion 42, the water W1 in the inside space portion S1 can be smoothly guided and discharged to the drain hole 45 along the inner peripheral lip portion 42.

Even when water W2 is blown into the outside space portion S2 between the flange portion 11 of the inlet box 10 and the lid body 31 of the lid 20 when the vehicle is washed, the water W2 is guided toward the lid 20 by the step portion 47 formed around the water discharge port 46. Accordingly, the water W2 is prevented from entering the drain hole 45 from the water discharge port 46.

The water discharge port 46 of the drain hole 45 is arranged at a position facing the lid body 31 inside the lid body 31 of the lid 20. Therefore, the lid body 31 of the lid 20 can prevent water sprayed onto the vehicle from directly hitting the water discharge port 46 and can prevent the water from penetrating the drain hole 45 from the water discharge port 46.

In addition, in the state in which the vehicle body panel 2 is mounted in the opening 3, since the drain hole 45 is arranged below, the water W1 in the inside space portion S1 can be smoothly discharged from the drain hole 45 arranged below.

The present invention is not limited to the above-described embodiment, and modifications, improvements, and the like can be made as appropriate. In addition, materials, shapes, dimensions, numbers, arrangement positions, and the like of the constituent elements in the above-described embodiment are optional and are not limited as long as the present invention can be achieved.

For example, in the above-described embodiment, a case in which one drain hole 45 is provided is shown, but a plurality of drain holes 45 may be provided. A shape of the drain hole 45 in the front view is not limited to an elliptical shape and may be a circular shape, a long circular shape, or a rectangular shape. The step portion 47 is not limited to a right angle and may have a tapered shape or the like.

According to the embodiment of the present disclosure, the inlet box 10 fitted and mounted in the opening 3 formed in the vehicle body panel 2 includes the seal portion 12 that is provided at a position facing the seal surface 5 of the opening 3 on an inner peripheral edge and that seals with the seal surface 5 over the whole periphery. The seal portion 12 includes the first lip portion (outer peripheral lip portion 41) that is provided to protrude toward the seal surface 5 over the peripheral direction and is in close contact with the seal surface 5, and the second lip portion (inner peripheral lip portion 42) that is provided to protrude toward the seal surface 5 over the peripheral direction and is in close contact with the seal surface 5 on an inner peripheral side relative to the first lip portion (outer peripheral lip portion 41). The drain hole 45 is formed between the first lip portion (outer peripheral lip portion 41) and the second lip portion (inner peripheral lip portion 42). The drain hole 45 communicates the inside space portion S1 formed by the seal surface 5, the first lip portion (outer peripheral lip portion 41), and the second lip portion (inner peripheral lip portion 42), and the outside space portion S2 with the lid 20 arranged with a gap on an opposite side from the seal surface 5.

According to this structure, the vehicle body panel can be doubly sealed by the first lip portion and the second lip portion to obtain an excellent seal state.

Even when the water exceeds the first lip portion and penetrates the inside space portion formed by the seal surface, the first lip portion, and the second lip portion when the vehicle is washed by a high-pressure washer or the like, the water is discharged from the inside space portion to the outside space portion through the drain hole. Accordingly, the water that enters the inside space portion can be prevented from exceeding the second lip portion and penetrating the opening of the vehicle body panel.

According to the embodiment of the present disclosure, in a cross-sectional view along the mounting direction in the opening 3, the drain hole 45 may be formed along the extending direction of the second lip portion (inner peripheral lip portion 42).

According to this structure, the water in the inner portion space portion can be smoothly guided to the drain hole along the second lip portion and discharged.

According to the embodiment of the present disclosure, the step portion 47 that guides the water W2 that enters the outside space portion S2 to a lid 20 side may be formed around the water discharge port 46 formed by the opening end 45b of the drain hole 45 on an outside space portion S2 side.

According to this structure, even when the water is blown into the outside space portion between the flange portion of the inlet box and the lid when the vehicle is washed, the water can be guided to the lid side by the step portion formed around the water discharge port. Accordingly, the water is prevented from entering the drain hole from the water discharge port.

According to the embodiment of the present disclosure, the water discharge port 46 formed by the opening end 45b of the drain hole 45 on the outside space portion S2 side may be arranged at a position facing the lid 20 inside the lid 2.

According to this structure, the lid can prevent water sprayed onto the vehicle from directly hitting the water discharge port and can prevent the water from penetrating the drain hole from the water discharge port.

According to the embodiment of the present disclosure, in the state in which the vehicle body panel 2 is mounted in the opening 3, the drain hole 45 may be arranged below.

According to this structure, the water in the inside space portion can be smoothly discharged from the drain hole arranged below.

The present application is based on Japanese Patent Application (Japanese Patent Application No. 2021-199663) filed on December 8, 2021, and the content thereof is incorporated herein as reference.

### REFERENCE SIGNS LIST

2: vehicle body panel
3: opening
5: seal surface
10: inlet box
12: seal portion
41: outer peripheral lip portion (first lip portion)
42: inner peripheral lip portion (second lip portion)
45: drain hole
46: water discharge port
47: step portion
S1: inside space portion
S2: outside space portion

## Claims

1. An inlet box configured to be fitted and mounted in an opening formed in a vehicle body panel, the inlet box comprising:
a seal portion provided at a position facing a seal surface of the opening on an inner peripheral edge and sealing with the seal surface over whole periphery,
wherein the seal portion includes:
a first lip portion provided to protrude toward the seal surface over a peripheral direction and being in close contact with the seal surface; and
a second lip portion provided to protrude toward the seal surface over the peripheral direction and being in close contact with the seal surface on an inner peripheral side relative to the first lip portion, and
wherein a drain hole for communicating an inside space portion formed by the seal surface, the first lip portion, and the second lip portion and an outside space portion with a lid arranged with a gap on an opposite side from the seal surface is formed between the first lip portion and the second lip portion.

2. The inlet box according to claim 1,
wherein, in a cross-sectional view along a mounting direction in the opening, the drain hole is formed along an extending direction of the second lip portion.

3. The inlet box according to claim 1 or 2,
wherein a step portion for guiding water that enters the outside space portion to a lid side is formed around a water discharge port formed by an opening end of the drain hole on an outside space portion side.

4. The inlet box according to any one of claims 1 to 3,
wherein the water discharge port formed by the opening end of the drain hole on the outside space portion side is arranged at a position facing the lid inside the lid.

5. The inlet box according to any one of claims 1 to 4,
wherein the drain hole is arranged below in a state in which the vehicle body panel is mounted in the opening.
